# EUROPEAN PATENT SPECIFICATION

(11) **EP 2 669 510 B1**
(45) Date of publication and mention of the grant of the patent: **16.07.2014**
(21) Application number: 12169991.2
(22) Date of filing: 30.05.2012
(51) Int. Cl.: F03D 7/02

(54) **A brake system for a wind turbine**
Bremssystem für eine Windturbine
Système de freinage pour éolienne

(43) Date of publication of application: 04.12.2013
(73) Proprietor: Siemens Aktiengesellschaft, 80333 München (DE)
(72) Inventor: Lind, Soeren Oemann, 4700 Næstved (DK); Munk-Hansen, Thorkil, 7323 Give (DK); Nielsen, Jacob Blach, 7442 Engesvang (DK); Stiesdal, Henrik, 5000 Odense C (DK)

(56) References cited:
- EP-A1- 2 333 325
- WO-A1-2011/095655
- US-A1- 2011 169 268

## Description

### Field of the invention

The present invention relates to a brake system for a wind turbine and to a wind turbine.

### Background art

A mechanical brake can serve as backup brake in case of failure of an aerodynamic brake. It can serve as emergency brake when a component of the wind turbine fails and a prompt stop of the wind turbine is necessary. Moreover, it can serve as a parking brake to position and keep wind turbine blades in a particular position and also as a means to ensure that no movement occurs when the wind turbine is serviced.

In a common arrangement of a direct drive wind turbine a nacelle and bedframe is mounted to a tower of a wind turbine. A generator is located between a hub with blades and the nacelle and bedframe. A stator of the generator is mounted to a stator bedframe comprising a hollow stator shaft, a front plate and a back plate. A segmented stator with coils is mounted to the front plate and back plate. A rotor equipped with permanent magnets surrounds the stator and is rotatable mounted to a bearing. The bearing is located on a hub side of the stator shaft.

It is common practice to attach a brake disc on a nacelle side of the generator (i.e. to the rotor) of a direct drive wind turbine. In this arrangement the brake callipers are attached to the stationary part of the wind turbine, i.e. the bedframe, stator of the generator or the nacelle.

State of the art is disclosed in the documents EP 2 333 325 Al and EP 1 925 820 B1, which relate to outer rotor configurations, and in the documents US 2009/0026771 A1 and US 2005/0230979 A1, which relate to inner rotor configurations.

### Description of the invention

It is the objective of the present intention to provide an advantageous brake system for a wind turbine and an advantageous a wind turbine.

This objective is solved by a brake system for a wind turbine as claimed in claim 1 and a wind turbine as claimed in claim 6. The depending claims define further developments of the present invention.

The inventive brake system for a wind turbine comprises a rotor assembly and a stator assembly. The stator assembly comprises a brake disc and the rotor assembly comprises at least one frictional member operatively configured for frictionally engaging at least a portion of the brake disc. The rotor assembly may, for example, comprise at least one brake calliper and/or at least one brake pad.

Core of the invention is a brake system, for example for a direct drive wind turbine, wherein for example a brake calliper and brake pad is mounted to a rotatable hub of a wind turbine. A corresponding brake disc can be mounted to or can be part of the stationary part of the main bearing, for instance mounting the callipers on the hub and using the stiffening ring on the bearing inner ring as brake disc.

Placing the brake callipers at the rotor assembly, for instance in the hub, allows facilitating hydraulic system and hydraulic accumulator of the pitch system for the brake system. Thus complexity in the wind turbine is reduced. The hydraulic accumulator allows for an increase in reliability of the brake system.

Advantageously, the inventive brake system can comprise a hydraulic system which is mounted to the rotor assembly, for example to the hub. The hydraulic system can comprise a hydraulic pump and/or an accumulator. The hydraulic pump can be connectable to an electrical power source, for example via a slip ring. Moreover, the hydraulic system can comprise a tube which connects the pump with the accumulator.

Preferably, the brake system is configured such that in case of a pressure loss in the hydraulic system the frictional member engages to the brake disc. This can be realised by means of a spring system.

The inventive wind turbine comprises a brake system as previously described. The wind turbine may comprise a hub. Preferably, the frictional member and/or the hydraulic system are/is mounted to the hub. For instance, brake callipers holding a number of brake pads are directly mounted to the hub. Advantageously, the frictional member and/or the hydraulic system can be located inside of the hub.

Generally, the wind turbine comprises a main bearing with a stationary part. Preferably the stationary part comprises the brake disc. The brake disc can be mounted to or can be part of the stationary part of the main bearing.

The wind turbine further comprises a rotation axis. The rotor assembly can comprise an outer portion which is located radially outward of the stator assembly, which means that the generator has an outer rotor configuration. Alternatively, the stator assembly can comprise an outer portion which is located radially outward of the rotor assembly, which means that the generator has an inner rotor configuration.

Furthermore, the wind turbine can be a direct drive wind turbine. The wind turbine may comprise a generator with a hub side and a nacelle side. The hub side of the generator is located close to the hub or is facing towards the hub. The nacelle side is the opposite side of the generator which has the largest distance from the hub. Preferably, the brake system is located at the hub side.

The wind turbine may further comprise a bearing with a stationary part which comprises a stiffening ring. The brake disc can be formed by the stiffening ring. A use of the stiffening ring as a brake disc reduces the number of components, system complexity and material cost. The stiffening ring provides structural rigidity to the bearing and holds it in circular or round shape. Thus, wear on the bearing is avoided. This design allows for a more purpose serving design of the rotor on a nacelle side. For instance access to permanent magnets loaded into the generator is eased with the absence of the brake disc. Furthermore it is possible to mount stiffening devices such as a ring or spokes to the rotor on the nacelle side without being restricted to serve a brake function.

Moreover, the wind turbine can comprise a hydraulic system which is connected to the brake system and to a pitch system. For example, hydraulic tubes can connect the brake system and the pitch system with an accumulator. The accumulator may be the accumulator which can also be part of the brake system, as previously described.

By connecting the hydraulic system to the brake system and to a pitch system a complex hydraulic system with a pitch system rotating in the hub and brake callipers with brake pads stationary mounted to the bedframe is avoided. The hydraulic system with hydraulic pump, accumulator, pitch system and brake system are located close together. Tubes between the hydraulic system components are kept very short. As all components are located inside the hub, there is no excessive movement of the hydraulic systems components relative to one another. Though rotating, there is only one reference frame. An additional advantage of the present invention is that access to the hub and hydraulic system is eased through the hollow stator shaft.

The brake callipers can be placed in the hub. Placing the brake callipers in the hub allows facilitating the hydraulic system and hydraulic accumulator of the pitch system for the brake system. Thus complexity in the wind turbine is reduced. Furthermore, a torque from the brakes does not act on the generator structure as the brake system is located in the hub. Thus, a less rigid generator design is possible. The generator is spared and material fatigue and damage to the structure is reduced.

### Description of embodiments

Further features, properties and advantages of the present invention will become clear from the following description of embodiments in conjunction with the accompanying drawings. The embodiments do not limit the scope of the present invention which is determined by the appended claims. All described features are advantageous as separate features or in any combination with each other.
- Figure 1: schematically shows a wind turbine.
- Figure 2: schematically shows a top section of a direct drive wind turbine with a hydraulic system comprising a pitch system, a brake system, an accumulator and a pump located in a hub.
- Figure 3: schematically shows in a sectional view part of the brake system in the area of the bearing.
- Figure 4: schematically shows a section of a further variant of the inventive brake system in a view seen from the hub.
- Figure 5: schematically shows a section of the variant of the inventive brake system of figure 4 in a sectional view along V-V.

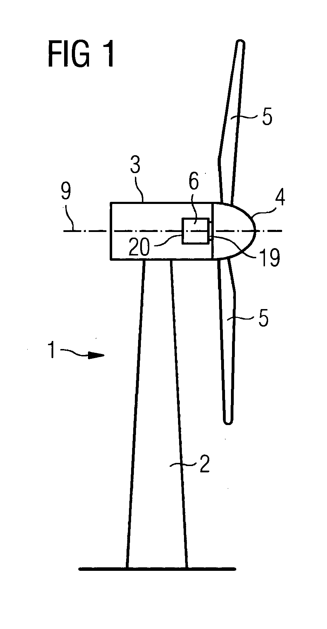

An embodiment of the present invention will now be described with reference to Figures 1 to 5.

Figure 1 schematically shows a wind turbine 1. The wind turbine 1 comprises a tower 2, a nacelle 3 and a hub 4. The nacelle 3 is located on top of the tower 2. The hub 4 comprises a number of wind turbine blades 5. The hub 4 is mounted to the nacelle 3. Moreover, the hub 4 is pivot-mounted such that it is able to rotate about a rotation axis 9. A generator 6 is located inside the nacelle 3. The generator comprises a hub side 19, which is facing the hub 4, and a nacelle side, which is located opposite to the hub 4. The wind turbine 1 is a direct drive wind turbine.

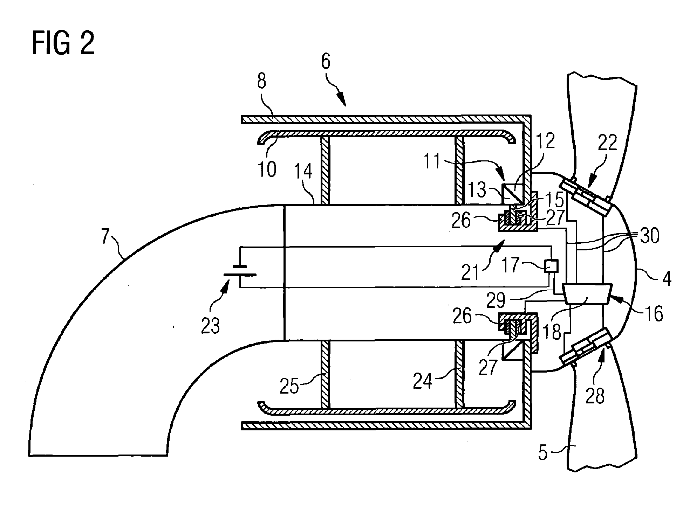

Figure 2 schematically shows a top section of a wind turbine 1 with a bedframe 7 and a generator 6 with a radially inside stator 10 and a radially outside rotor 8. A front plate 24 and a back plate 25 are connected to a hollow stator shaft 14. The stator 10 is mounted to the front plate 24 and to the back plate 25.

The stator 10 is connected to a hollow stator shaft 14 by means of a front plate 24 and a back plate 25.

A bearing 11 is mounted on a hub side 19 of the wind turbine 1. The bearing 11 comprises a rotational part 12 and a stationary part 13. The hub 4 and the rotor 8 are connected to the rotational part 12 of the bearing 11 and the stationary part 13 of the bearing 11 is connected to the hollow stator shaft 14. The stationary part 13 of the bearing 11 is located on an inner circumferential part of said bearing and comprises of a stiffening ring 15 which serves as a brake disc 15.

The inventive brake system is part of the hydraulic system 16 of the wind turbine 1 or is connected to the hydraulic system 16 of the wind turbine 1. The hydraulic system 16 is mounted to and located on an inside of the hub 4. The hydraulic system 16 comprises a hydraulic pump 17, an accumulator 18, the brake system 21 and a pitch system 22. The hydraulic pump 17 is connected to an electric power source 23 via a slip ring.

Brake callipers 26 holding a number of brake pads 27 are directly mounted to the hub 4. When power is generated and the rotor 8 is turning the hydraulic system 16 rotates with the hub 4. The hydraulic pitch system 22 allows altering a pitch angle and altering or adjusting an angle of attack of blades 5 relative to an airflow over the blades airfoil. Each blade 5 is pitched by two hydraulic cylinders 28 which are mounted in the hub 4. The hydraulic pitch system 22 also allows aerodynamic braking, pitching the blade by 90°, pitching the blades into the wind or inducing a stall.

The hydraulic accumulator 18 acts as energy storage and provides power to the pitch system 22 and brake system 21 even though when for instance the hydraulic pump 17 has failed. Thus the brake system 21 can bring the wind turbine 1 to a halt even though a failure occurred. Furthermore the functionality of the pitch system 22 is secured and maintained for a time necessary to react after a hydraulic pump failure. Thus even in case of a failure the blades 5 can be pitched into a "safe" position in which harm to the wind turbine and its components such as generator 6, blades 5 or hub 4 for instance due to overspeed can be avoided.

A tube 29 connects the hydraulic pump 17 and the accumulator 18. Further hydraulic tubes 30 connect the brake system 21 and the pitch system 22 with the accumulator 18. For additional safety the brake system 21 can be designed to engage the brake pads 27 to the brake disc 15 in case of a pressure loss. The pitch system 22 can have a safety functionality in which the blades pitch into a position in which they work as an air brake when hydraulic pressure falls below a lower limit.

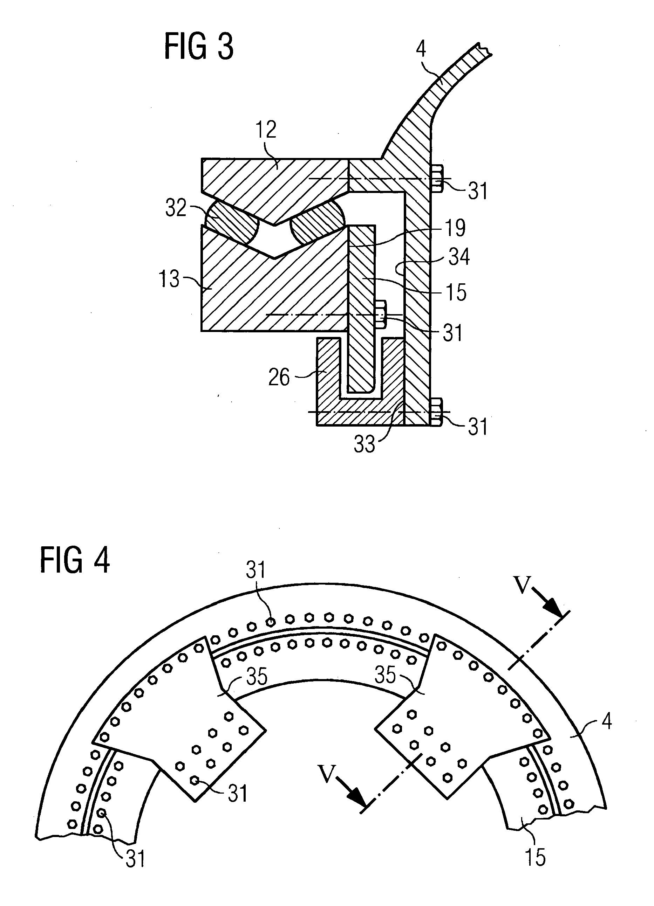

Figure 3 schematically shows in a sectional view part of the brake system in the area of the bearing 11. The bearing 11 comprises of the rotational outer ring 12 and the stationary inner ring 13. Two sets of rollers 32 are arranged in a first and a second roller track respectively. The first and the second roller tracks are arranged at an angle and converge in a middle section of the bearing 11. The brake disc 15 which serves as a means to provide additional stiffness to the bearing 11 is mounted on the hub side 19 of the stationary part 13 of the bearing 11 with bolts 31. The brake disc 15 projects into a hollow space on the inner circumference of the bearing 11.

The hub 4 is bolted to the rotational part 12 of the bearing 11 and comprises an interface 33 on a generator side 34 of the hub 4 to which a brake calliper 26 is mounted. The U-shaped brake calliper 26 encompasses the brake disc 15, wherein not further indicated brake pads 27 are located in a space between the brake calliper 26 and the brake disc 15. The brake pads 27 are moved by means of hydraulic pressure. A spring system forces the brake pads 27 on the brake disc 15 when a hydraulic pressure is to low and thus engages the brakes and avoids movement of the rotational part 12 relative to the stationary part 13 of the wind turbine 1.

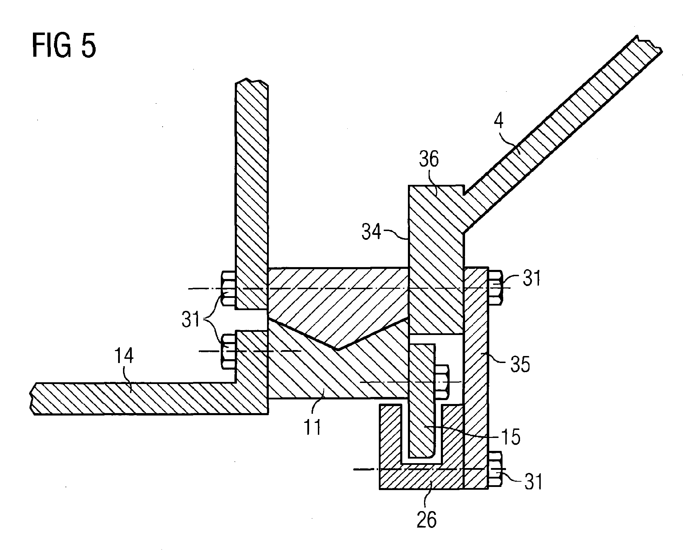

Figure 4 schematically shows a section of a further variant of the inventive brake system in a view seen from the hub. Figure 5 schematically shows a section of the variant of the inventive brake system of figure 4 in a sectional view along V-V. The hub 4 and the rotor 8 are mounted to the rotational part 12 of the bearing 11. The brake disc 15 is mounted to the stationary part 13 of the bearing 11 which is connected to the stator shaft 14. A number of brackets 35 are bolted to the hub 4. Callipers 26 and brake pads 27 are connected to the bracket 35. In this embodiment the brake disc 15 provides only minor stiffening. Stiffening is mainly provided by a collar structure on the generator side 34 of the hub 4. In Figur 5 the hub 4 comprises a stiffness portion 36 with an increased thickness in axial direction. The single parts are connected to one another with bolts 31.

## Claims

1. A brake system (21) for a wind turbine (1) comprising a rotor assembly and a stator assembly,
**characterised in that**
the stator assembly comprises a brake disc (15) and the rotor assembly comprises at least one frictional member (27) operatively configured for frictionally engaging at least a portion of the brake disc (15).

2. The brake system (21) as claimed in claim 1,
**characterised in that**
the rotor assembly comprises at least one brake calliper (26) and/or at least one brake pad (27).

3. The brake system (21) as claimed in claim 1 or claim 2,
**characterised in that**
the brake system (21) comprises a hydraulic system (16) which is mounted to the rotor assembly.

4. The brake system (21) as claimed in claim 3,
**characterised in that**
the hydraulic system (16) comprises a hydraulic pump (17) and/or an accumulator (18).

5. The brake system (21) as claimed in claim 3 or claim 4,
**characterised in that**
the brake system is configured such that in case of a pressure loss in the hydraulic system (16) the frictional member (27) engages to the brake disc (15).

6. A wind turbine (1),
**characterised in that**
it comprises a brake system (21) as claimed in any of the claims 1 to 5.

7. The wind turbine as claimed in claim 6,
**characterised in that**
it comprises a hub (4) and the frictional member (27) and/or the hydraulic system (16) is mounted to the hub (4).

8. The wind turbine (1) as claimed in claim 6 or claim 7,
**characterised in that**
it comprises a main bearing (11) with a stationary part (12) which comprises the brake disc (15).

9. The wind turbine (1) as claimed in any of the claims 6 to 8,
**characterised in that**
the wind turbine (1) comprises a rotation axis (9) and the rotor assembly comprises an outer portion which is located radially outward of the stator assembly or the stator assembly comprises an outer portion which is located radially outward of the rotor assembly.

10. The wind turbine (1) as claimed in any of the claims 6 to 9,
**characterised in that**
the wind turbine (1) is a direct drive wind turbine.

11. The wind turbine (1) as claimed in any of the claims 6 to 10,
**characterised in that**
the wind turbine (1) comprises a generator (6) with a hub side (19) and the brake system (21) is located at the hub side (19).

12. The wind turbine (1) as claimed in any of the claims 6 to 11,
**characterised in that**
the wind turbine (1) comprises a bearing (11) with a stationary part (13) which comprises a stiffening ring (15), and the brake disc (15) is formed by the stiffening ring (15).

13. The wind turbine (1) as claimed in any of the claims 6 to 12,
**characterised in that**
the wind turbine (1) comprises a hydraulic system (16) which is connected to the brake system (21) and to a pitch system (22).

14. The wind turbine (1) as claimed in any of the claims 6 to 13,
**characterised in that**
the brake callipers (26) are placed in the hub (4).

## Patentansprüche

1. Bremssystem (21) für eine Windkraftanlage (1), welche eine Rotoranordnung und eine Statoranordnung umfasst,
**dadurch gekennzeichnet, dass**
die Statoranordnung eine Bremsscheibe (15) umfasst und die Rotoranordnung mindestens ein Reibelement (27) umfasst, das funktionswirksam dafür ausgebildet ist, an mindestens einem Abschnitt der Bremsscheibe (15) in Reibeingriff zu gelangen.

2. Bremssystem (21) nach Anspruch 1,
**dadurch gekennzeichnet, dass**
die Rotoranordnung mindestens einen Bremssattel (26) und/oder mindestens einen Bremsbelag (27) umfasst.

3. Bremssystem (21) nach Anspruch 1 oder Anspruch 2,
**dadurch gekennzeichnet, dass**
das Bremssystem (21) ein Hydrauliksystem (16) umfasst, welches an der Rotoranordnung angebracht ist.

4. Bremssystem (21) nach Anspruch 3,
**dadurch gekennzeichnet, dass**
das Hydrauliksystem (16) eine Hydraulikpumpe (17) und/oder einen Druckspeicher (18) umfasst.

5. Bremssystem (21) nach Anspruch 3 oder Anspruch 4,
**dadurch gekennzeichnet, dass**
das Bremssystem so gestaltet ist, dass im Falle eines Druckverlustes in dem Hydrauliksystem (16) das Reibelement (27) mit der Bremsscheibe (15) in Eingriff gelangt.

6. Windkraftanlage (1),
**dadurch gekennzeichnet, dass**
sie ein Bremssystem (21) nach einem der Ansprüche 1 bis 5 umfasst.

7. Windkraftanlage nach Anspruch 6,
**dadurch gekennzeichnet, dass**
sie eine Nabe (4) umfasst und das Reibelement (27) und/oder das Hydrauliksystem (16) an der Nabe (4) angebracht ist.

8. Windkraftanlage (1) nach Anspruch 6 oder Anspruch 7,
**dadurch gekennzeichnet, dass**
sie ein Hauptlager (11) mit einem stationären Teil (12) umfasst, welches die Bremsscheibe (15) umfasst.

9. Windkraftanlage (1) nach einem der Ansprüche 6 bis 8,
**dadurch gekennzeichnet, dass**
die Windkraftanlage (1) eine Drehachse (9) umfasst und die Rotoranordnung einen äußeren Abschnitt umfasst, welcher radial außerhalb der Statoranordnung angeordnet ist, oder die Statoranordnung einen äußeren Abschnitt umfasst, welcher radial außerhalb der Rotoranordnung angeordnet ist.

10. Windkraftanlage (1) nach einem der Ansprüche 6 bis 9,
**dadurch gekennzeichnet, dass**
die Windkraftanlage (1) eine Windkraftanlage mit Direktantrieb ist.

11. Windkraftanlage (1) nach einem der Ansprüche 6 bis 10,
**dadurch gekennzeichnet, dass**
die Windkraftanlage (1) einen Generator (6) mit einer Nabenseite (19) umfasst und das Bremssystem (21) auf der Nabenseite (19) angeordnet ist.

12. Windkraftanlage (1) nach einem der Ansprüche 6 bis 11,
**dadurch gekennzeichnet, dass**
die Windkraftanlage (1) ein Lager (11) mit einem stationären Teil (13) umfasst, welcher einen Versteifungsring (15) umfasst, und die Bremsscheibe (15) von dem Versteifungsring (15) gebildet wird.

13. Windkraftanlage (1) nach einem der Ansprüche 6 bis 12,
**dadurch gekennzeichnet, dass**
die Windkraftanlage (1) ein Hydrauliksystem (16) umfasst, welches mit dem Bremssystem (21) und mit einem Pitch-System (22) verbunden ist.

14. Windkraftanlage (1) nach einem der Ansprüche 6 bis 13,
**dadurch gekennzeichnet, dass**
die Bremssättel (26) in der Nabe (4) angeordnet sind.

## Revendications

1. Système de freinage (21) pour éolienne (1) comprenant un ensemble rotor et un ensemble stator,
**caractérisé en ce que**
l'ensemble stator comprend un disque de frein (15) et l'ensemble rotor comprend au moins un élément de friction (27) configuré opérationnellement pour engager par friction au moins une partie du disque de frein (15).

2. Système de freinage (21) selon la revendication 1,
**caractérisé en ce que**
l'ensemble rotor comprend au moins un étrier de frein (26) et/ou au moins un patin de frein (27).

3. Système de freinage (21) selon la revendication 1 ou la revendication 2,
**caractérisé en ce que**
le système de freinage (21) comprend un système hydraulique (16) qui est monté sur l'ensemble rotor.

4. Système de freinage (21) selon la revendication 3,
**caractérisé en ce que**
le système hydraulique (16) comprend une pompe hydraulique (17) et/ou un accumulateur (18).

5. Système de freinage (21) selon la revendication 3 ou la revendication 4,
**caractérisé en ce que**
le système de freinage est configuré de telle sorte que, en cas de perte de pression dans le système hydraulique (16), l'élément de friction (27) s'engage avec le disque de frein (15).

6. Éolienne (1),
**caractérisée en ce que**
elle comprend un système de freinage (21) selon une quelconque des revendications 1 à 5.

7. Éolienne selon la revendication 6,
**caractérisée en ce que**
elle comprend un moyeu (4) et l'élément de friction (27) et/ou le système hydraulique (16) est monté sur le moyeu (4) .

8. Éolienne (1) selon la revendication 6 ou la revendication 7,
**caractérisée en ce que**
elle comprend un palier principal (11) avec une partie fixe (12) qui comprend le disque de frein (15).

9. Éolienne (1) selon une quelconque des revendications 6 à 8,
**caractérisée en ce que**
l'éolienne (1) comprend un axe de rotation (9) et l'ensemble rotor comprend une partie extérieure qui est située radialement à l'extérieur de l'ensemble stator ou l'ensemble stator comprend une partie extérieure qui est située radialement à l'extérieur de l'ensemble rotor.

10. Éolienne (1) selon une quelconque des revendications 6 à 9,
**caractérisée en ce que**
l'éolienne (1) est une éolienne à entraînement direct.

11. Éolienne (1) selon une quelconque des revendications 6 à 10,
**caractérisée en ce que**
l'éolienne (1) comprend un générateur (6) avec un côté moyeu (19) et le système de freinage (21) est situé au niveau du côté moyeu (19).

12. Éolienne (1) selon une quelconque des revendications 6 à 11,
**caractérisée en ce que**
l'éolienne (1) comprend un palier (11) avec une partie fixe (13) qui comprend une bague de raidissement (15), et le disque de frein (15) est formé par la bague de raidissement (15) .

13. Éolienne (1) selon une quelconque des revendications 6 à 12,
**caractérisée en ce que**
l'éolienne (1) comprend un système hydraulique (16) qui est connecté au système de freinage (21) et à un système de pas (22) .

14. Éolienne (1) selon une quelconque des revendications 6 à 13,
**caractérisée en ce que**
les étriers de frein (26) sont placés dans le moyeu (4).
